# EUROPÄISCHE PATENTSCHRIFT

(11) **EP 4 219 293 B1**
(45) Veröffentlichungstag und Bekanntmachung des Hinweises auf die Patenterteilung: **04.09.2024**
(21) Anmeldenummer: 22154255.8
(22) Anmeldetag: 31.01.2022
(51) Int. Cl.: B64C 1/14

(54) **VORRICHTUNG ZUM DURCHFÜHREN EINER SCHLIESS- UND ÖFFNUNGSBEWEGUNG EINES FRACHTTORS EINES FLUGZEUGS**
DEVICE FOR PERFORMING A CLOSING AND OPENING MOVEMENT OF A CARGO DOOR OF AN AIRCRAFT
DISPOSITIF DE MISE EN UVRE D'UN MOUVEMENT DE FERMETURE ET D'OUVERTURE D'UN PORTAIL DE CHARGEMENT D'UN AÉRONEF

(43) Veröffentlichungstag der Anmeldung: 02.08.2023
(73) Patentinhaber: Airbus Operations GmbH, 21129 Hamburg (DE)
(72) Erfinder: OHLE, Sören, 21129 Hamburg (DE)
(74) Vertreter: LKGLOBAL Lorenz & Kopf Patentanwalt Attorney at Law PartG mbB

(56) Entgegenhaltungen:
- WO-A1-2009/059808
- DE-A1- 102019 207 125
- FR-A1- 2 110 343

## Beschreibung

### Technisches Gebiet

Die vorliegende Beschreibung betrifft eine Vorrichtung zum Durchführen einer Schließ- und Öffnungsbewegung eines Frachttors eines Flugzeugs; eine Frachttor-Vorrichtung für ein Flugzeug; sowie ein Flugzeug.

### Technischer Hintergrund

Das Frachttor eines größeren Verkehrsflugzeugs weist üblicherweise eine beträchtliche Größe mit Kantenlängen von mehreren Metern auf und ist üblicherweise mit einer Oberkante schwenkbar an einem etwa parallel zur Flugzeuglängsachse angeordneten Scharnier gelagert. Eine der Oberkante entgegengesetzte Unterkante wird beim Öffnen und Schließen des Frachttors folglich auf einer Kreisbahn um das Scharnier herum bewegt. Wird das Frachttor geöffnet, wird es um das Scharnier nach oben geschwenkt und die Unterkante könnte bei der Bewegung etwa auf Höhe der Oberkante oder etwas oberhalb zum Halten kommen. Beim Schließen wird die Unterkante mithilfe mehrerer Verschlüsse an dem Rumpf verriegelt. Üblicherweise sind mehrere, in einem Abstand zueinander angeordnete Verschlüsse vorgesehen, welche mit entsprechenden Verschlusselementen in Eingriff geraten.

Aufgrund der Größe des Frachttors, der allgemeinen Elastizität üblicher Flugzeugstrukturen und wechselnder Belastung am Boden durch Winde sowie während des Flugs durch Massen- und Trägheitskräfte kann sich das Frachttor und die umliegende Struktur elastisch verformen. Es ist daher sinnvoll, Mittel zu verwenden, die eindeutige Lastpfade zwischen der Unterkante des Frachttors und der Struktur, beispielsweise durch exakte Positionierung der Unterkante des Frachttors, realisieren können.

Aus EP 2 212 192 B1 ist ein Verriegelungsmechanismus für eine Frachttür in einer Rumpfzelle eines Flugzeugs bekannt, wobei der Verriegelungsmechanismus eine Anzahl von Rumpfzellenbeschlägen im Bereich einer Ladekante, eine entsprechende Anzahl von Frachttürbeschlägen und ein Schiebeelement aufweist, wobei die Verriegelung der Frachttür durch das Schiebeelement erfolgt und die Frachttürbeschläge in formschlüssigen Verriegelungseingriff mit den Rumpfzellenbeschlägen bringbar sind, wobei Umfangslasten der Rumpfzelle durch eine Lastabtragungsfläche übertragen werden und radiale Lasten im Wesentlichen von dem Schiebeelement aufgenommen werden. Der Frachttürbeschlag ist dort weiterhin mit einem Sicherungsmechanismus zur zusätzlichen Eigensicherung des Schiebeelements gegen unbeabsichtigtes Öffnen versehen, der eine Sicherungsstange mit einem Sicherungsnocken aufweist, wobei der Sicherungsnocken in einem verriegelten Zustand der Frachttür durch Verschwenken der Sicherungsstange in mindestens eine Sicherungsausnehmung im Schiebeelement einbringbar ist.

### Beschreibung

Es kann als Aufgabe betrachtet werden, eine Vorrichtung vorzuschlagen, die dazu ausgebildet ist, eine Schließ- und Öffnungsbewegung eines Frachttors zu verbessern und eine elastische Verspannung des Frachttors zu vermeiden.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird eine Vorrichtung zum Durchführen einer Schließ- und Öffnungsbewegung eines Frachttors eines Flugzeugs vorgeschlagen, wobei das Frachttor an einer Toroberseite schwenkbar gelagert ist und an einer Torunterseite zwei einander entgegengesetzt angeordnete Gleitrollen aufweist, die Vorrichtung aufweisend ein erstes Handhabungselement zum Handhaben einer ersten Gleitrolle des Frachttors, ein zweites Handhabungselement zum Handhaben einer zweiten Gleitrolle des Frachttors, und eine mit dem ersten Handhabungselement und dem zweiten Handhabungselement gekoppelte Antriebsvorrichtung, wobei das erste Handhabungselement und das zweite Handhabungselement jeweils einen Aufnahmeabschnitt mit einer ersten Anschlagfläche, einer davon beabstandeten zweiten Anschlagfläche und einer zwischen den Anschlagflächen angeordneten Eintrittsöffnung für eine Gleitrolle aufweisen, wobei die Antriebsvorrichtung dazu ausgebildet ist, die Aufnahmeabschnitte der Handhabungselemente selektiv zwischen einer ersten Position und einer zweiten Position zu bewegen, wobei die Aufnahmeabschnitte dazu dimensioniert sind, die betreffende Gleitrolle in der ersten Position zu umschließen und von einem geöffneten Zustand durch eine der Anschlagflächen durch Bewegen des Aufnahmeabschnitts in die zweite Position die betreffende Gleitrolle in den geschlossenen Zustand zu drängen und die Gleitrolle aus dem geschlossenen Zustand durch die andere der Anschlagflächen durch Bewegen des Aufnahmeabschnitts in die erste Position in den geöffneten Zustand zu drängen.

Die erfindungsgemäße Vorrichtung ist folglich dazu in der Lage, eine Unterseite eines Frachttors zu führen, wenn sie sich in einem geringen Abstand zu einer vollständig geschlossenen Position befindet. Das Frachttor weist hierfür zwei Gleitrollen auf, die an einander gegenüberliegenden Seiten des Frachttors angeordnet sind und quer von dem Frachttor abstehen. Ist das Frachttor an einer Seitenfläche eines Flugzeugrumpfes angeordnet, sodass eine Schwenkkante des Frachttors parallel zu einer Längsachse des Flugzeugs verläuft, erstrecken sich die Gleitrollen bevorzugt ebenso parallel zu der Längsachse.

Wie weiter vorangehend dargestellt, ist es bei einer ausgeprägten Relativverformung zwischen Frachttor und Rahmen denkbar, dass eine elastische Verspannung des Frachttors eintreten kann, wenn die Gleitrollen oder andere, an dem Frachttor angeordnete und zum Führen verwendete Gleitrollen, Zapfen und dergleichen in entsprechende Aufnahmen geführt werden. Eine Unterkante des Frachttors könnte sich etwa zu einer korrespondierenden Öffnungskante des Flugzeugrumpfs verschränken, sodass die Gleitrollen, Zapfen und dergleichen gegen einen mechanischen Widerstand in entsprechende Führungen bewegt werden müssen. Bei einer Schließbewegung eines Frachttors, das lediglich an einer Oberkante schwenkbar gelagert ist, können die Gleitrollen und dergleichen etwa zunächst mit den vorgesehenen Führungen in Flächenkontakt geraten und erfahren dort eine Rollreibung. Hierbei könnte eine elastische Verspannung des Tores entstehen, die durch fortwährenden Antrieb des Frachttors zu überwinden ist, bis das Tor vollständig geschlossen ist. Um die Rollen im Flug lastfrei zu stellen, weiten sich die Rollenführungen gegen Ende und der Schließwiderstand erhöht sich von Rollreibung auf Gleitreibung. Im umgekehrten Fall, d.h. beim Öffnen des Frachttors, muss zuerst die Haftreibungskraft an den Kontaktstellen überwunden werden. Der Widerstand fällt auf Gleitreibung und reduziert sich stark, sobald die Rollen die Führung übernehmen. Durch einen Antrieb des Frachttors muss folglich an der Unterseite eine Kraft entstehen, die diese anfänglich hohe Haftreibungskraft überwindet. Hierbei kann das Frachttor eine kontinuierlich zunehmende elastische Verspannung erreichen, insbesondere, wenn ein Tor- Hebeantrieb wie üblich nahe der oberen Torkante angeordnet ist, bis die Haftreibungskraft überwunden ist. Bis zu diesem Punkt verbleibt die Unterseite des Frachttors in der geschlossenen Position, bis sie ruckartig gelöst wird.

Die erfindungsgemäße Vorrichtung ist dafür vorgesehen, die Unterkante des Frachttors von einer annähernd geschlossenen Position in die geschlossene Position zu ziehen und umgekehrt von einer geschlossenen Position in eine leicht geöffnete Position zu verschieben. Eine kontrollierte Öffnungs- bzw. Schließbewegung ist die Folge, was die Toröffnungsmechanik entlastet und das Öffnen und Schließen unterstützt.

Hierzu werden erfindungsgemäß zwei Handhabungselemente eingesetzt, die jeweils einen Aufnahmeabschnitt umfassen und zum Greifen einer der beiden Gleitrollen vorgesehen sind. Die beiden Handhabungselemente sind mit einer Antriebsvorrichtung gekoppelt. Bevorzugt sind beide Handhabungselemente mit einer einzigen Antriebsvorrichtung verbunden, sodass ein reduzierter Aufwand zum Bewegen der beiden Handhabungselemente erzielt wird. Jedes der Handhabungselemente weist einen Aufnahmeabschnitt auf, der im Wesentlichen zwei Anschlagflächen und eine Aufnahmeöffnung umfasst. Die Anschlagflächen sind voneinander beanstandet und dazu vorgesehen, mit einer Gleitrolle in Flächenkontakt zu geraten. Die Antriebsvorrichtung ist dazu ausgebildet, den jeweiligen Aufnahmeabschnitt zum Umschließen der betreffenden Gleitrolle zu bewegen.

Ein Aspekt der Erfindung liegt in der Ausgestaltung des Aufnahmeabschnitts, bei dem je nach Bewegung des Handhabungselements die Gleitrolle von einer der Anschlagflächen von der annähernd geschlossenen Position in eine geschlossene Position gedrängt werden kann und mit der jeweils anderen Anschlagfläche eine umgekehrte Richtung, d.h. von der geschlossenen Position in die annähernd geschlossene Position, zu bewegen. Jede der Anschlagflächen ist folglich dazu bestimmt, eine Umfangsfläche einer Gleitrolle zu kontaktieren und durch fortgesetzte Bewegung die Gleitrolle in eine bestimmte Richtung mitzunehmen.

Es ist dabei bevorzugt, den jeweiligen Aufnahmeabschnitt zumindest in einem Bewegungsabschnitt im Wesentlichen parallel zu den Anschlagflächen oder mit einem ausgeprägten Bewegungsanteil parallel zu den Anschlagflächen zu bewegen, um eine betreffende Gleitrolle zwischen den Anschlagflächen einzuschließen oder hieraus zu entfernen. Zum Heranziehen oder Wegdrängen der Gleitrolle kann sich in der Bewegung des Handhabungselements ein Bewegungsanteil an dem Aufnahmeabschnitt anschließen, der quer zu den Anschlagflächen verläuft.

Besonders bevorzugt sind die Handhabungselemente über ein Koppelgetriebe mit der Antriebsvorrichtung verbunden. Eine kontinuierliche Bewegung der Antriebsvorrichtung kann folglich zu einer sich wiederholenden Bewegungssequenz des Handhabungselements führen, bei der mehrere Bewegungsabschnitte aufeinander folgen, die zum Einführen der Gleitrolle, zum Bewegen der Gleitrolle und zum Lösen der Gleitrolle führen. Ein Koppelgetriebe, mit dem eine kinematische Kette realisiert wird, führt zu einer robusten, zuverlässigen, hoch belastbaren und zudem weitgehend wartungsarmen Vorrichtung, welche einfach zu betreiben ist.

In einer vorteilhaften Ausführungsform weist der Aufnahmeabschnitt ein U-förmiges Profil mit zwei voneinander beabstandeten Schenkeln auf, an denen die Anschlagflächen ausgebildet sind. Die Schenkel könnten beispielsweise parallel zueinander verlaufen. Sie könnten zudem auch einen Winkel zueinander einschließen, welcher bevorzugt bis zu 25° oder weniger betragen könnte. Zwischen den beiden Schenkeln könnte eine Bodenfläche angeordnet sein, die der Eintrittsöffnung gegenüber angeordnet ist. Die Schenkel sind dabei derart voneinander beanstandet, dass eine Gleitrolle zuverlässig zwischen die beiden Schenkel einführbar ist, um mit einer der Anschlagflächen in Kontakt zu geraten.

In einer vorteilhaften Ausführungsform schließen die Anschlagflächen einen Abstand zueinander ein, der einen Durchmesser der Gleitrollen übersteigt und bevorzugt zumindest doppelt so groß ist. Folglich kann auch bei ungenau positionierten Gleitrollen bzw. ungenau positioniertem Aufnahmeabschnitt eine Gleitrolle aufgenommen werden.

In einer vorteilhaften Ausführungsform sind die Handhabungsvorrichtungen als Hebel ausgeführt, wobei der jeweilige Aufnahmeabschnitt an einem ersten Ende des Hebels angeordnet ist, und wobei die Antriebsvorrichtung und die Handhabungsvorrichtungen dazu ausgebildet sind, die Handhabungsvorrichtungen auf einer kontinuierlichen, pendelnden Hubbewegung in einer Ebene zu bewegen, die quer zu einer Längserstreckung der Gleitrollen ausgerichtet ist. Eine Handhabungsvorrichtung kann sich folglich von dem Flugzeugrumpf nach außen erstrecken, um dort eine Gleitrolle zu greifen oder dorthin zu bewegen. Die Antriebsvorrichtung kann von dem Aufnahmeabschnitt beabstandet mit der entsprechenden Handhabungsvorrichtung gekoppelt sein. Weiterhin kann, gesteuert durch die Erstreckung der Handhabungsvorrichtung, eine Antriebsvorrichtung beispielsweise unterhalb eines Frachtraumfußbodens randseitig einer Toröffnung positioniert werden, sodass sich lediglich die Handhabungsvorrichtungen von dort in Richtung des Frachttors erstrecken. Ein Pendelanteil der Bewegung der Handhabungsvorrichtungen dient der Bereitstellung des Bewegungsanteils parallel zu den Anschlagflächen. Die Hubbewegung dient indes zum Realisieren des Bewegungsanteils quer zu den Anschlagflächen.

In einer vorteilhaften Ausführungsform weist die Antriebsvorrichtung einen Exzenter auf, der schwenkbar mit einem zweiten Ende der Handhabungsvorrichtung gekoppelt ist, wobei die Handhabungsvorrichtung einen zwischen dem ersten Ende und dem zweiten Ende angeordnetes Linearlager aufweist, an dem die Handhabungsvorrichtung verschiebbar an einem Festpunkt gelagert ist. Das Linearlager kann auf unterschiedliche Weisen realisiert werden. Neben der Verwendung eines Schlitzes in der betreffenden Handhabungsvorrichtung in Kombination mit einem in dem Schlitz angeordneten, strukturfest montierbaren Gleiter kann auch ein die Handhabungsvorrichtung umgreifendes Element verwendet werden, welches ein axiales Gleiten erlaubt. Das Linearlager führt die Handhabungsvorrichtung in einer Längsrichtung, um die Hubbewegung zu gewährleisten. Es ist vorteilhaft, wenn das Linearlager zusätzlich schwenkbar gelagert ist, um ein Verkanten der Handhabungsvorrichtung zu verhindern. Der Exzenter kann rotierend angetrieben werden, während die Handhabungsvorrichtung exzentrisch zu einer Drehachse des Exzenters mit diesem gekoppelt ist. Durch die Ausführung und Lage des Linearlagers, die Dimensionierung der Handhabungsvorrichtung sowie die Größe der Exzentrizität kann die Bewegung des Aufnahmeabschnitts genau auf die Anforderungen abgestimmt werden.

Hierdurch ergibt sich eine Mehrgelenkkette, welche zum Bewegen des Aufnahmeabschnitts auf zwei Bewegungsabschnitten führt. Einer der beiden Bewegungsabschnitte umfasst das Annähern des Aufnahmeabschnitts an die Gleitrolle und das anschließende Heranziehen. Der andere Bewegungsabschnitt umfasst indes das Wegdrücken der Gleitrolle und das Entfernen von der Gleitrolle.

In einer vorteilhaften Ausführungsform sind die Antriebsvorrichtung und die Handhabungsvorrichtungen dazu ausgebildet, dass die Handhabungsvorrichtung um einen Winkel von bis zu 45° pendelt. Diese Pendelbewegung könnte ausreichen, um den Aufnahmeabschnitt an die Gleitrolle zu bewegen bzw. davon zu entfernen. Es ist vorstellbar, auch kleinere Winkel zu realisieren. Der Pendelwinkel ist an die Ausführung der Handhabungsvorrichtung angepasst, um das gewünschte Bewegungsmuster zu realisieren.

Die Erfindung betrifft ferner eine Frachttor-Vorrichtung für ein Flugzeug, aufweisend ein Frachttor, eine Rumpfstruktur und eine Vorrichtung nach der vorhergehenden Beschreibung, wobei die Vorrichtung an der Rumpfstruktur angeordnet ist.

Die Frachttor-Vorrichtung kann ferner eine in dem Frachttor oder der Rumpfstruktur angeordnete Verriegelungsstange zum Verriegeln des Frachttors in einer geschlossenen Position aufweisen, wobei die Verriegelungsstange mit einem Antrieb gekoppelt ist, und wobei die Antriebsvorrichtung der Vorrichtung mit dem Antrieb gekoppelt ist. Die Verriegelungsstange könnte an dem Frachttor angeordnet sein und dient der Verriegelung des Frachttors an der Rumpfstruktur. Die Verriegelung erfolgt dabei in dem vollständig geschlossenen Zustand des Frachttors durch Einklinken von Verriegelungselementen, etwa drehbar gelagerten Haken, in die Verriegelungsstange. Die Verriegelungsstange könnte alternativ dazu auch an der Rumpfstruktur angeordnet sein und zum Verriegeln eine Längsbewegung ausführen, um mit entsprechenden Verriegelungsmitteln an dem Frachttor zu verriegeln. Folglich ist ein mechanischer Antrieb einer Verriegelungsstange oder anderen Verriegelungselementen notwendig, um das Frachttor zu verriegeln. Der Antrieb könnte mit der Antriebsvorrichtung der erfindungsgemäßen Vorrichtung gekoppelt bzw. kombiniert werden. Insbesondere in dem vorangehend dargestellten Fall, bei dem ein Koppelgetriebe bzw. eine kinematische Kette realisiert sind, könnte auch eine umlaufende Welle sowohl die Handhabungsvorrichtungen bewegen, als auch eine Verriegelung mit der Verriegelungsstange durchführen.

In einer vorteilhaften Ausführungsform könnte die Antriebsvorrichtung eine rotierbare Welle aufweisen, wobei der Antrieb eine Ausgangswelle aufweist, die mit einem Verriegelungselement verbunden ist, durch zwei Kurvenscheibenelemente mit der Welle gekoppelt ist und dazu ausgebildet ist, zwischen einer verriegelten und einer geöffneten Lage zu verschwenken. Die Kurvenscheibenelemente können die Ausgangswelle zwischen zwei unterschiedlichen Lagen, d.h. zwei Drehwinkeln, hin- und herbewegen. Der Winkelbereich kann derart bemessen sein, dass beim Bewegen der Ausgangswelle in diesem Winkelbereich ausreicht, um das Verriegelungselement zu schließen oder zu öffnen. Die Kurvenscheibenelemente könnten sich mit der um 360° rotierbaren Welle drehen und umfangsseitig eine Kurvenform mit einer Erhebung bzw. einer Ausnehmung umfassen, mit dem ein bevorzugt rollengelagerter Schwenkhebel bewegt wird. Der rollengelagerte Schwenkhebel könnte beispielhaft zwei voneinander beanstandete Rollen umfassen, die mit den Kurvenscheibenelementen in Kontakt stehen. Der Schwenkhebel kann en einer strukturfesten Schwenkachse gelagert sein, die von beiden Rollen beabstandet ist. Die Schwenkachse und die Ausrichtung der Rollen ist derart an das Kurvenscheibenelement angepasst, dass beide Rollen stets auf dem Umfang der Kurvenscheibenelemente aufliegen. Durch Koppeln des Schwenkhebels mit einer Ausgangswelle kann folglich das Verriegelungselement synchron in einem bestimmten Drehwinkelbereich zur Antriebvorrichtung bewegt werden.

In einer vorteilhaften Ausführungsform sind die Antriebsvorrichtung und der Antrieb derart gekoppelt, dass die Verriegelungsstange verriegelt wird, sobald die Gleitrollen in ihre geschlossene Position bewegt sind. Bei obigem Beispiel bleibend, könnten die Ausnehmung oder die Erhebung an dem Kurvenscheibenelement dort angeordnet sein, wo die Lage der Handhabungsvorrichtungen der geschlossenen Position zumindest weitgehend entspricht.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Frachttorvorrichtung gemäß einem Ausführungsbeispiel.
- Fig. 2a+2b: schematische Darstellungen einer Antriebsvorrichtung und eines Antriebs.
- Fig. 3a-3e: schematische Darstellung des Öffnens und Schließens.
- Fig. 4: ein Flugzeug.

### Detaillierte Beschreibung von Ausführungsbeispielen

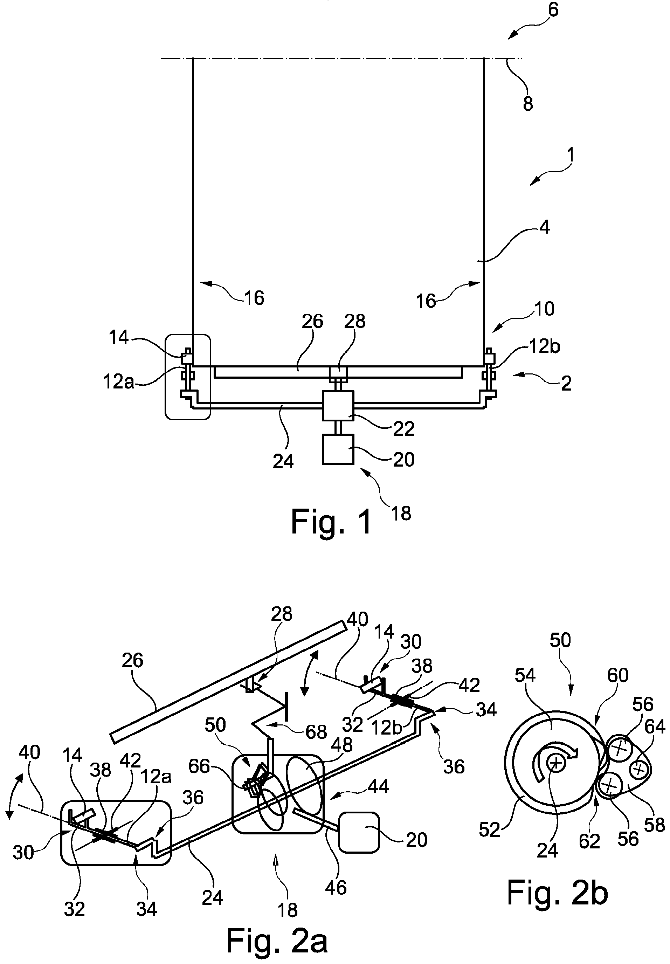

Fig. 1 zeigt eine Vorrichtung 2 zum Durchführen einer Schließ- und Öffnungsbewegung eines Frachttors 4 eines Flugzeugs in einer schematischen Darstellung. Die Vorrichtung 2 und das Frachttor 4 bilden eine Frachttor-Vorrichtung 1. Hier ist das Frachttor 4 in einer Draufsicht gezeigt. Das Frachttor 4 ist an einer Toroberseite 6 schwenkbar an einer Schwenkachse 8 gelagert. Dort kann ein Torantrieb vorgesehen sein, der das Frachttor 4 öffnet bzw. schließt. An einer Torunterseite 10 sind zwei Handhabungselemente 12 vorgesehen, die jeweils eine Gleitrolle 14 handhaben können, welche an einer Seitenfläche 16 des Frachttors 4 angeordnet ist.

Eine Antriebsvorrichtung 18 mit einem Aktuator 20 und einer Getriebeanordnung 22 ist vorgesehen, um die Handhabungselemente 12 zu bewegen. Die Antriebsvorrichtung 18 bewegt die Handhabungselemente 12 gleichzeitig und überträgt hierzu ein Drehmoment über eine rotierbare Welle 24. Gleichzeitig wird eine an dem Frachttor 4 angeordnete Verriegelungsstange 26 über ein Verriegelungselement 28 verriegelt, wobei das Verriegelungselement 28 ebenso über die Antriebsvorrichtung 18 angetrieben ist.

Fig. 2 zeigt eine etwas detailliertere Darstellung der Vorrichtung 2. Hier sind ein erstes Handhabungselement 12a und ein zweites Handhabungselement 12b gezeigt. Jedes der Handhabungselemente 12a und 12b weist ein erstes Ende 30 auf, an dem ein Aufnahmeabschnitt 32 angeordnet ist. An einem zweiten Ende 34 ist das Handhabungselement 12a bzw. 12b schwenkbar mit der rotierbaren Welle 24 gekoppelt.

Die rotierbare Welle 24 weist an ihren Enden jeweils einen Exzenterhebel 36 auf, der gelenkig mit dem zweiten Ende 34 des Handhabungselements 12a bzw. 12b gekoppelt ist. Weiterhin ist ein Linearlager 38 vorgesehen, das dazu ausgebildet ist, das Handhabungselement 12a bzw. 12b entlang einer Haupterstreckungsachse 40 des Handhabungselements 12a bzw. 12b zu führen. Die Haupterstreckungsachse 40 ist hierbei als eine Verbindungslinie zwischen dem ersten Ende 30 und dem zweiten Ende 34 ausgebildet. Weiterhin ist das Linearlager 38 schwenkbar um eine Lagerschwenkachse 42 gelagert. Hierdurch kann eine Bewegung quer zu der Haupterstreckungsachse 40 erfolgen.

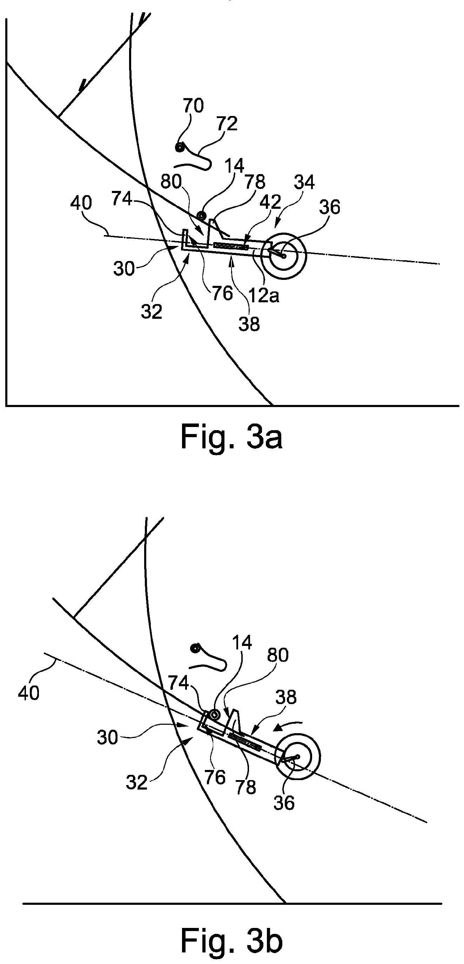

Diese Anordnung realisiert eine kinematische Kette, durch die der Aufnahmeabschnitt 32 gezielt zum Bewegen der Gleitrolle 14 angetrieben wird. Bewegt sich die Welle 24, rotiert der Exzenterhebel 36 auf einer durch die Abmessungen des Exzenterhebels 36 bestimmten Kreisbahn und nimmt hierdurch das zweite Ende 34 des Handhabungselements 12a mit. Dadurch wird es in dem Linearlager 38 hin- und her bewegt, wobei die Haupterstreckungsachse 40 des Handhabungselements 12a bzw. 12b hierbei eine Pendelbewegung durchführt. Wie in den Fig. 3a bis 3e ersichtlich, wird der Aufnahmeabschnitt 32 bei nicht ganz geschlossenem Frachttor 4 an die Gleitrolle 14 herangeführt und zieht die Gleitrolle 14 zum vollständigen Schließen des Frachttors 4. Zum Öffnen des Frachttors 4 kann der Aufnahmeabschnitt 32 die Gleitrolle 14 fassen und in die andere Richtung drücken.

Der Aktuator 20 kann über ein Schneckengetriebe 44 mit einer Schneckenwelle 46 und einem Schneckenrad 48 die Welle 24 antreiben. Das Verriegelungselement 28 wird über einen Antrieb 50 angetrieben, der mit der Antriebsvorrichtung 18 gekoppelt ist. Der Antrieb 50 wird, wie in Fig. 2b näher erläutert als Getriebe mit Exzenterscheiben ausgeführt.

Hier sind zwei Exzenterscheiben 52 und 54 gezeigt, die mit Rollen 56 eines Schwenkhebels 58 in bündigem Flächenkontakt stehen. Jeweils eine der beiden Rollen 56 steht jeweils mit einer der beiden Exzenterscheiben 52 und 54 in Kontakt. Die Exzenterscheiben 52 und 54 weisen Erhebungen 60 und/oder Vertiefungen 62 auf, durch die die Rollen 56 bei Rotation der Exzenterscheiben 52 und 54 leicht versetzt werden, sodass der Schwenkhebel 58 um eine Schwenkhebelachse 64 geschwenkt wird. Ein Schwenkwinkel könnte beispielsweise bis zu 25° liegen, wobei Ausführungen mit größeren oder kleineren Winkeln durchaus denkbar sind. Der Schwenkhebel 58 ist mit einer Ausgangswelle 66 gekoppelt, die durch Rotation der Schwenkbewegung folgt. Die Rotation der Ausgangswelle 66 treibt wiederum eine Hebelmechanik 68 zum Bewegen des Verriegelungselements 28 an.

Die Bewegungen der Handhabungselemente 12a und 12b sowie des Verriegelungselements 28 sind derart aneinander angepasst, dass beim Bewegen des Frachttors 4 von einer annähernd geschlossenen Position in eine geschlossene Position auch eine Verriegelung durch das Verriegelungselement 28 durchgeführt wird. Die Bewegungen des Frachttors 4 durch die Handhabungselemente 12a und 12b sowie das Verriegeln des Verriegelungselements 28 werden in den weiter nachfolgenden Figuren 3a bis 3e dargestellt.

In Fig. 3a ist das erste Handhabungselement 12a in einer neutralen Position gezeigt. Der Exzenterhebel 36 befindet sich in einer Position, die hier mit 0° bezeichnet wird. Der Aufnahmeabschnitt 32 ist von der Gleitrolle 14 beabstandet. Ferner ist hier ein Zapfen 70 dargestellt, der ebenso an der Seite 16 des Frachttors 4 angeordnet ist und in einen Führungstrichter 72, der strukturfest positioniert ist, einzuführen ist. Der Zapfen 70 ist hier etwas außermittig gezeigt und steht in bündigem Kontakt mit einer oberen Randfläche des Führungstrichters 72. Zum Greifen der Gleitrolle 14 ist in Fig. 3b der Exzenterhebel 36 um einige Grad entgegen dem Uhrzeigersinn rotiert. Das erste Handhabungselement 12a ändert dabei den Winkel seiner Haupterstreckungsachse 40, sodass der Aufnahmeabschnitt 32 an die Gleitrolle 14 angenähert wird. Ein äußerer, erster Schenkel 74 des Aufnahmeabschnitts 32 weist eine erste Anschlagfläche 76 auf, die in Kontakt mit der Gleitrolle 14 gerät.

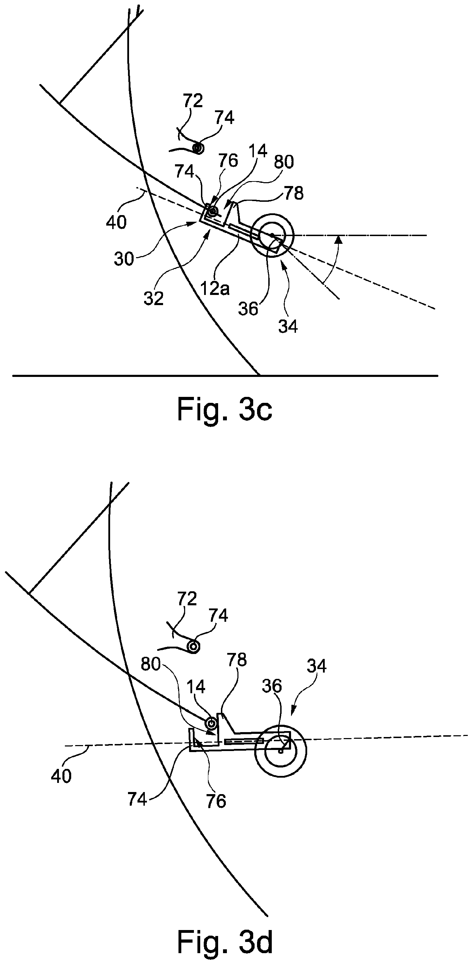

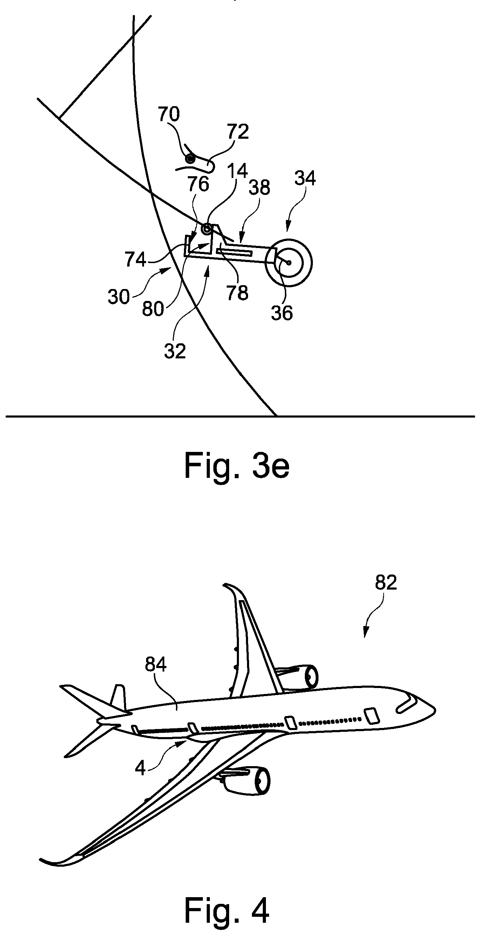

Durch eine fortwährende Rotation bleibt die Gleitrolle 14 in Kontakt mit der ersten Anschlagfläche 76 und wird von dem ersten Handhabungselement 12a in Richtung des Exzenterhebels 36 gezogen. In Fig. 3c wird etwa eine Endstellung des Aufnahmeabschnitts 32 gezeigt, bei der das Frachttor 4 vollständig geschlossen ist. Beispielhaft könnte der Exzenterhebel 36 um insgesamt 150° von der Neutrallage aus Fig. 3a rotiert sein. In dieser Position kann eine Verriegelung an der Verriegelungsstange 26 initiiert werden. Dies bedeutet, dass das Verriegelungselement 28 an diesem Punkt in Bewegung versetzt wird. Dies könnte durch weiter fortgesetzte Rotation des Exzenterhebels 36 bis in eine in der Zeichnungsebene waagerechte Lage, beispielsweise bei 195°, erfolgen. Dort kann die Bewegung des Exzenterhebels bzw. der Welle 24 unterbrochen werden, Fig. 3d. Das Frachttor 4 ist dann geschlossen und verriegelt und die Gleitrolle 14 befindet sich nicht mehr in einem bündigen Flächenkontakt mit dem Aufnahmeabschnitt 32. Eine Entriegelung kann durch fortgesetzte Rotation in die in Fig. 3e gezeigte Position erfolgen. Dies könnte einem Drehwinkel von exemplarisch 240° entsprechen. In Fig. 3e ist ein zweiter Schenkel 78 gezeigt, der von dem ersten Schenkel 74 beabstandet ist, und eine daran angeordnete zweite Anschlagsfläche 80 umfasst. Diese steht in der gezeigten Position mit der Gleitrolle 14 in Kontakt. Bei fortgesetzter Rotation bis zu der in Fig. 3a gezeigten Neutrallage wird die Gleitrolle 14 nach außen gedrängt und das Frachttor 4 in eine leicht geöffnete Position bewegt. Der Zapfen 70 verlässt dabei ebenso den Führungstrichter 72. In diesem Bewegungsablauf werden Haftreibungskräfte von Türführungen überwunden und ein Torantrieb kann das Öffnen des Frachttors 4 durchführen.

Fig. 4 zeigt ein Flugzeug 82 mit einem Flugzeugrumpf 84 bzw. einer Rumpfstruktur 84 sowie einem Frachttor 4. Es ist an einer Unterseite des Flugzeugrumpfs 84 angeordnet und in dieser Zeichnung verdeckt.

### Bezugszeichenliste

- 1: Frachttor-Vorrichtung
- 2: Vorrichtung zum Durchführen einer Schließ- und Öffnungsbewegung
- 4: Frachttor
- 6: Toroberseite
- 8: Schwenkachse
- 10: Torunterseite
- 12, 12a/b: Handhabungselement
- 14: Gleitrolle
- 16: Seitenfläche
- 18: Antriebsvorrichtung
- 20: Aktuator
- 22: Getriebeanordnung
- 24: Welle
- 26: Verriegelungsstange
- 28: Verriegelungselement
- 30: erstes Ende
- 32: Aufnahmeabschnitt
- 34: zweites Ende
- 36: Exzenterhebel
- 38: Linearlager
- 40: Haupterstreckungsachse
- 42: Lagerschwenkachse
- 44: Schneckengetriebe
- 46: Schneckenwelle
- 48: Schneckenrad
- 50: Antrieb
- 52: Exzenterscheibe
- 54: Exzenterscheibe
- 56: Rolle
- 58: Schwenkhebel
- 60: Erhebung
- 62: Vertiefung
- 64: Schwenkhebelachse
- 66: Ausgangswelle
- 68: Hebelmechanik
- 70: Zapfen
- 72: Führungstrichter
- 74: erster Schenkel
- 76: erste Anschlagfläche
- 78: zweiter Schenkel
- 80: zweite Anschlagfläche
- 82: Flugzeug
- 84: Flugzeugrumpf / Rumpfstruktur

## Patentansprüche

1. Vorrichtung (2) zum Durchführen einer Schließ- und Öffnungsbewegung eines Frachttors (4) eines Flugzeugs (82), wobei das Frachttor (4) an einer Toroberseite (6) schwenkbar gelagert ist und an einer Torunterseite (10) zwei einander entgegengesetzt angeordnete Gleitrollen (14) aufweist, die Vorrichtung (2) aufweisend:
ein erstes Handhabungselement (12, 12a) zum Handhaben einer ersten Gleitrolle (14) des Frachttors (4),
ein zweites Handhabungselement (12, 12b) zum Handhaben einer zweiten Gleitrolle (14) des Frachttors (4), und
eine mit dem ersten Handhabungselement (12, 12a) und dem zweiten Handhabungselement (12, 12b) gekoppelte Antriebsvorrichtung (18),
wobei das erste Handhabungselement (12, 12a) und das zweite Handhabungselement (12, 12b) jeweils einen Aufnahmeabschnitt (32) mit einer ersten Anschlagfläche (76), einer davon beabstandeten zweiten Anschlagfläche (80) und einer zwischen den Anschlagflächen (76, 80) angeordneten Eintrittsöffnung für eine Gleitrolle (14) aufweisen,
wobei die Antriebsvorrichtung (18) dazu ausgebildet ist, die Aufnahmeabschnitte (32) der Handhabungselemente (12, 12a, 12b) selektiv zwischen einer ersten Position und einer zweiten Position zu bewegen,
wobei die Aufnahmeabschnitte (32) dazu dimensioniert sind, die betreffende Gleitrolle (14) in der ersten Position zu umschließen und von einem geöffneten Zustand durch eine der Anschlagflächen (76, 80) durch Bewegen des Aufnahmeabschnitts (32) in die zweite Position die betreffende Gleitrolle (14) in den geschlossenen Zustand zu drängen und die Gleitrolle (14) aus dem geschlossenen Zustand durch die andere der Anschlagflächen (76, 80) durch Bewegen des Aufnahmeabschnitts (32) in die erste Position in den geöffneten Zustand zu drängen.

2. Vorrichtung (2) nach Anspruch 1,
wobei der Aufnahmeabschnitt (32) ein U-förmiges Profil mit zwei voneinander beabstandeten Schenkeln (74, 78) aufweist, an denen die Anschlagflächen (76, 80) ausgebildet sind.

3. Vorrichtung (2) nach einem der vorhergehenden Ansprüche,
wobei die Anschlagflächen (76, 80) einen Abstand zueinander einschließen, der einen Durchmesser der Gleitrollen (14) übersteigt und bevorzugt zumindest doppelt so groß ist.

4. Vorrichtung (2) nach einem der vorhergehenden Ansprüche,
wobei die Handhabungsvorrichtungen (12, 12a, 12b) als Hebel ausgeführt sind,
wobei der jeweilige Aufnahmeabschnitt (32) an einem ersten Ende (30) des Hebels (12, 12a, 12b) angeordnet ist, und
wobei die Antriebsvorrichtung (18) und die Handhabungsvorrichtungen (12, 12a, 12b) dazu ausgebildet sind, die Handhabungsvorrichtungen (12, 12a, 12b) auf einer kontinuierlichen, pendelnden Hubbewegung in einer Ebene zu bewegen, die quer zu einer Längserstreckung der Gleitrollen (14) ausgerichtet ist.

5. Vorrichtung (2) nach Anspruch 4,
wobei die Antriebsvorrichtung (18) einen Exzenter aufweist, der drehbar mit einem zweiten Ende (34) der Handhabungsvorrichtung (12, 12a, 12b) gekoppelt ist, und
wobei die Handhabungsvorrichtung (12, 12a, 12b) einen zwischen dem ersten Ende (30) und dem zweiten Ende (34) angeordnetes Linearlager (38) aufweist, an dem die Handhabungsvorrichtung (12, 12a, 12b) verschiebbar an einem Festpunkt gelagert ist.

6. Vorrichtung (2) nach Anspruch 4 oder 5,
wobei die Antriebsvorrichtung (18) und die Handhabungsvorrichtungen (12, 12a, 12b) dazu ausgebildet sind, um einen Winkel von bis zu 45° zu pendeln.

7. Frachttor-Vorrichtung (1) für ein Flugzeug (82), aufweisend ein Frachttor (4), eine Rumpfstruktur (84) und eine Vorrichtung (2) nach einem der vorhergehenden Ansprüche, wobei die Vorrichtung (2) an der Rumpfstruktur (84) angeordnet ist.

8. Frachttor-Vorrichtung (1) nach Anspruch 7, ferner aufweisend eine in dem Frachttor (4) oder der Rumpfstruktur (84) angeordnete Verriegelungsstange (26) zum Verriegeln des Frachttors (4) in einer geschlossenen Position, wobei die Verriegelungsstange (26) mit einem Antrieb (50) gekoppelt ist, und wobei die Antriebsvorrichtung (18) der Vorrichtung mit dem Antrieb (50) gekoppelt ist.

9. Frachttor-Vorrichtung (1) nach Anspruch 8, wobei die Antriebsvorrichtung (18) eine rotierbare Welle (24) aufweist, wobei der Antrieb (50) eine Ausgangswelle (66) aufweist, die mit einem Verriegelungselement (28) verbunden ist, durch zwei Kurvenscheibenelemente (52, 54) mit der Welle (24) gekoppelt ist und dazu ausgebildet ist, zwischen einer verriegelten und einer geöffneten Lage zu verschwenken.

10. Frachttor-Vorrichtung (1) nach Anspruch 8 oder 9, wobei die Antriebsvorrichtung (18) und der Antrieb (50) derart gekoppelt sind, dass die Verriegelungsstange (26) verriegelt wird, sobald die Gleitrollen (14) in ihre geschlossene Position bewegt sind.

11. Flugzeug, aufweisend einen Flugzeugrumpf (84), ein Frachttor (4) und eine Vorrichtung (2) nach einem der Ansprüche 1 bis 6 und/oder eine Frachttor-Vorrichtung (4) nach einem der Ansprüche 7 bis 10.

## Claims

1. Device (2) for carrying out a closing and opening movement of a cargo door (4) of an aircraft (82), wherein the cargo door (4) is pivotably mounted on a door upper side (6) and has two castors (14) which are disposed so as to oppose one another on a door lower side (10), the device (2) having:
a first handling element (12, 12a) for handling a first castor (14) of the cargo door (4);
a second handling element (12, 12b) for handling a second castor (14) of the cargo door (4); and
a drive device (18) which is coupled to the first handling element (12, 12a) and to the second handling element (12, 12b);
wherein the first handling element (12, 12a) and the second handling element (12, 12b) each have a receptacle portion (32) having a first detent face (76), a second detent face (80) spaced apart therefrom, and an entry opening for a castor (14) which is disposed between the detent faces (76, 80);
wherein the drive device (18) is designed to move the receptacle portions (32) of the handling elements (12, 12a, 12b) selectively between a first position and a second position;
wherein the receptacle portions (32) are sized so as to enclose the respective castor (14) in the first position and to urge the respective castor (14) from an opened state owing to one of the detent faces (76, 80) to the closed state by moving the receptacle portion (32) to the second position, and to urge the castor (14) from the closed state owing to the other one of the detent faces (76, 80) to the opened state by moving the receptacle portion (32) to the first position.

2. Device (2) according to Claim 1,
wherein the receptacle portion (32) has a U-shaped profile having two mutually spaced apart legs (74, 78) on which the detent faces (76, 80) are formed.

3. Device (2) according to either of the preceding claims,
wherein the detent faces (76, 80) enclose a mutual spacing which exceeds a diameter of the castors (14) and is preferably at least double in size.

4. Device (2) according to one of the preceding claims, wherein the handling devices (12, 12a, 12b) are embodied as levers;
wherein the respective receptacle portion (32) is disposed on a first end (30) of the lever (12, 12a, 12b); and
wherein the drive device (18) and the handling devices (12, 12a, 12b) are designed to move the handling devices (12, 12a, 12b) in a continuous reciprocating lifting movement in a plane that is aligned transversely to a longitudinal extent of the castors (14).

5. Device (2) according to Claim 4,
wherein the drive device (18) has an eccentric which is rotatably coupled to a second end (34) of the handling device (12, 12a, 12b); and
wherein the handling device (12, 12a, 12b) has a linear bearing (38) which is disposed between the first end (30) and the second end (34) and on which the handling device (12, 12a, 12b) is mounted so as to be displaceable on a fixed point.

6. Device (2) according to Claim 4 or 5,
wherein the drive device (18) and the handling devices (12, 12a, 12b) are designed to reciprocate about an angle of up to 45°.

7. Cargo door device (1) for an aircraft (82), having a cargo door (4), a fuselage structure (84) and a device (2) according to one of the preceding claims, wherein the device (2) is disposed on the fuselage structure (84).

8. Cargo door device (1) according to Claim 7, furthermore having a locking bar (26), which is disposed in the cargo door (4) or the fuselage structure (84), for locking the cargo door (4) in a closed position, wherein the locking bar (26) is coupled to a drive (50), and wherein the drive device (18) of the device is coupled to the drive (50).

9. Cargo door device (1) according to Claim 8, wherein the drive device (18) has a rotatable shaft (24), wherein the drive (50) has an output shaft (66) which is connected to a locking element (28), is coupled to the shaft (24) by way of two cam disc elements (52, 54), and is designed to pivot between a locked and an opened position.

10. Cargo door device (1) according to Claim 8 or 9, wherein the drive device (18) and the drive (50) are coupled in such a manner that the locking bar (26) is locked as soon as the castors (14) are moved to their closed position.

11. Aircraft having an aircraft fuselage (84), a cargo door (4) and a device (2) according to one of Claims 1 to 6, and/or a cargo door device (4) according to one of Claims 7 to 10.

## Revendications

1. Dispositif (2) pour effectuer un mouvement de fermeture et d'ouverture d'un portail de chargement (4) d'un aéronef (82), le portail de chargement (4) étant monté de manière pivotante sur un côté supérieur de portail (6) et présentant sur un côté inférieur de portail (10) deux galets de glissement (14) agencés de manière opposée l'un à l'autre, le dispositif (2) présentant :
un premier élément de manipulation (12, 12a) pour manipuler un premier galet de glissement (14) du portail de chargement (4),
un deuxième élément de manipulation (12, 12b) pour manipuler un deuxième galet de glissement (14) du portail de chargement (4), et
un dispositif d'entraînement (18) couplé au premier élément de manipulation (12, 12a) et au deuxième élément de manipulation (12, 12b),
dans lequel le premier élément de manipulation (12, 12a) et le deuxième élément de manipulation (12, 12b) présentent chacun une section de réception (32) avec une première surface de butée (76), une deuxième surface de butée (80) espacée de celle-ci et une ouverture d'entrée pour un galet de glissement (14) agencée entre les surfaces de butée (76, 80),
dans lequel le dispositif d'entraînement (18) est configuré pour déplacer sélectivement les sections de réception (32) des éléments de manipulation (12, 12a, 12b) entre une première position et une deuxième position,
dans lequel les sections de réception (32) sont dimensionnées pour entourer le galet de glissement (14) concerné dans la première position et pour pousser le galet de glissement (14) concerné dans l'état fermé à partir d'un état ouvert par l'une des surfaces de butée (76, 80) en déplaçant la section de réception (32) dans la deuxième position et pour pousser le galet de glissement (14) de l'état fermé dans l'état ouvert par l'autre des surfaces de butée (76, 80) en déplaçant la section de réception (32) dans la première position.

2. Dispositif (2) selon la revendication 1,
dans lequel la section de réception (32) présente un profilé en forme de U avec deux branches (74, 78) espacées l'une de l'autre, sur lesquelles sont réalisées les surfaces de butée (76, 80).

3. Dispositif (2) selon l'une quelconque des revendications précédentes,
dans lequel les surfaces de butée (76, 80) comprennent une distance l'une par rapport à l'autre qui dépasse un diamètre des galets de glissement (14) et qui est de préférence au moins deux fois plus grande.

4. Dispositif (2) selon l'une quelconque des revendications précédentes,
dans lequel les dispositifs de manipulation (12, 12a, 12b) sont réalisés sous forme de leviers,
dans lequel la section de réception respective (32) est agencée à une première extrémité (30) du levier (12, 12a, 12b), et
dans lequel le dispositif d'entraînement (18) et les dispositifs de manipulation (12, 12a, 12b) sont configurés pour déplacer les dispositifs de manipulation (12, 12a, 12b) sur un mouvement de course oscillant continu dans un plan orienté transversalement à une extension longitudinale des galets de glissement (14).

5. Dispositif (2) selon la revendication 4,
dans lequel le dispositif d'entraînement (18) présente un excentrique couplé de manière rotative à une deuxième extrémité (34) du dispositif de manipulation (12, 12a, 12b), et
dans lequel le dispositif de manipulation (12, 12a, 12b) présente un palier linéaire (38) agencé entre la première extrémité (30) et la deuxième extrémité (34), sur lequel le dispositif de manipulation (12, 12a, 12b) est monté de manière coulissante sur un point fixe.

6. Dispositif (2) selon la revendication 4 ou 5,
dans lequel le dispositif d'entraînement (18) et les dispositifs de manipulation (12, 12a, 12b) sont configurés pour osciller sur un angle allant jusqu'à 45°.

7. Dispositif de portail de chargement (1) pour un aéronef (82), présentant un portail de chargement (4), une structure de fuselage (84) et un dispositif (2) selon l'une quelconque des revendications précédentes, dans lequel le dispositif (2) est agencé sur la structure de fuselage (84).

8. Dispositif de portail de chargement (1) selon la revendication 7, présentant en outre une tige de verrouillage (26) agencée dans le portail de chargement (4) ou la structure de fuselage (84) pour verrouiller le portail de chargement (4) dans une position fermée, dans lequel la tige de verrouillage (26) est couplée à un entraînement (50), et dans lequel le dispositif d'entraînement (18) du dispositif est couplé à l'entraînement (50).

9. Dispositif de portail de chargement (1) selon la revendication 8, dans lequel le dispositif d'entraînement (18) présente un arbre rotatif (24), dans lequel l'entraînement (50) présente un arbre de sortie (66) qui est relié à un élément de verrouillage (28), est couplé à l'arbre (24) par deux éléments de came (52, 54) et est configuré pour pivoter entre une position verrouillée et une position ouverte.

10. Dispositif de portail de chargement (1) selon la revendication 8 ou 9, dans lequel le dispositif d'entraînement (18) et l'entraînement (50) sont couplés de telle sorte que la tige de verrouillage (26) est verrouillée dès que les galets de glissement (14) sont déplacés vers leur position fermée.

11. Aéronef, présentant un fuselage d'aéronef (84), un portail de chargement (4) et un dispositif (2) selon l'une quelconque des revendications 1 à 6 et/ou un dispositif de portail de chargement (4) selon l'une quelconque des revendications 7 à 10.
